# EUROPEAN PATENT SPECIFICATION

(11) **EP 0 891 543 B1**
(45) Date of publication and mention of the grant of the patent: **09.03.2005**
(21) Application number: 97920141.5
(22) Date of filing: 04.04.1997
(51) Int. Cl.: G01N 27/64

(54) **TRANSPORTABLE ION MOBILITY SPECTROMETER WITH RECIRCULATING FILTRATION SYSTEM**
TRAGBARER IONENBEWEGLICHKEITSSPEKTROMETER MIT RÜCKFÜHRENDER FILTERVORRICHTUNG
SPECTROMETRE DE MOBILITE IONIQUE PORTABLE AVEC SYSTEME DE FILTRATION A RECIRCULATION

(30) Priority: 04.04.1996 US 627584; 04.04.1996 US 628147; 08.10.1996 US 726843
(43) Date of publication of application: 20.01.1999
(73) Proprietor: Mine Safety Appliances Company, Pittsburgh, PA 15238 (US)
(72) Inventor: PERTINARIDES, John, M., A., Orlando, FL 32817 (US); TARASSOV, Alexandre, S., Mars, PA 16046 (US); CARNAHAN, Byron, L., Pittsburgh, PA 15237 (US); PIPICH, Charles, W., Monroeville, PA 15146 (US); KOUZNETSOV, Viktor, Mars, PA 16046 (US); UBER, Robert, E., Allison Park, PA 15101 (US)
(74) Representative: Müller-Boré & Partner Patentanwälte
(86) International application number: PCT/US1997/005641
(87) International publication number: WO 1997/038302

(56) References cited:
- EP-A- 0 135 747
- US-A- 4 259 573
- US-A- 4 317 995
- US-A- 5 032 721
- ANALYTICAL CHEMISTRY, vol. 65, no. 3, 1993, COLUMBUS US, pages 299-306, XP000350046 A. P. SNYDER: "PORTABLE HAND-HELD GAS CHROMATOGRAPHY/ION MOBILITY SPECTROMETRY DEVICE"

## Description

### FIELD OF THE INVENTION

The invention relates generally to a transportable recirculating filtration system for use in conducting measurements with an ion mobility spectrometer (IMS), and also to a transportable recirculating filtration system for using a field IMS sensor in gas chromatography applications.

### BACKGROUND OF THE INVENTION

U.S. Patent No. 5,420,424 provides a sensor using ion mobility spectrometry (IMS) to detect trace concentration level species present in a sample gas stream. The IMS sensor disclosed in U.S. Patent No. 5,420,424 utilizes periodic electrical fields to separate different species of ions according to the functional dependence of their mobility with electric field strength. Ions generated in the ionization chamber of the IMS sensor are guided through an ion filter to an ion detector by an electric field known as the "dispersion field. " This "dispersion field" is created by an asymmetric periodic radio frequency (RF) voltage applied between a pair of closely spaced longitudinal electrodes. The displacement of the ions induced by the dispersion field is modified or compensated by a second electric field known as the "compensation field." The compensation field is created by an adjustable time independent direct current electrical potential that is applied between the electrodes to isolate a particular ion species for detection as a result of the variance in mobility between particular ion species as a function of electric field strength. This form of ion mobility spectrometry, known as field ion spectrometry, offers a new method of detecting species present at trace (parts per million to parts per trillion) concentration levels in a sample gas to be analyzed.

To avoid compromising the sensor's performance due to impurities which may be present in the carrier fluid stream that transports the ions through the ion filter, existing IMS sensor designs require connection to a filtration system to clean the carrier fluid stream flow prior to its introduction into the sensor. The use of a stationary filtration source presents a problem if the IMS sensor is to be used as a portable instrument in the detection of atmospheric contaminants in remote locations. Existing portable filtration systems used with IMS devices are not compatible with the IMS design disclosed in U.S. Patent No. 5,420,424. The present invention solves this problem by providing a recirculating filtration system for use with a transportable IMS sensor of the design disclosed in U.S. Patent No. 5,420,424.

One preferred embodiment of the present invention provides a recirculating filtration system for use with a transportable IMS sensor in measuring an unknown concentration of a selected ionizable contaminant substance present in a sample in which other substances may coexist. The ambient air sample containing the contaminant of interest can compromise IMS performance due to the variable amount of humidity and trace species present in the ambient air stream. The accuracy of the sensor's concentration measurement can be adversely affected by charge transfer reactions which occur between the ionizable contaminant of interest and other ionizable species present in the ambient air sample. Charge transfer reactions can either enhance or diminish the net efficiency with which the contaminant of interest is ionized. Consequently, the sensor's apparent response would depend not only on the concentration of the contaminant of interest in the ambient air sample, but also on the concentration of other substances which contribute to its ionization through these charge transfer reactions. The adverse effects of charge transfer reactions on the IMS sensor's performance can be eliminated through the use of a filtration system configuration which introduces a known concentration of the ionizable contaminant of interest into a fluid stream containing an unknown concentration of the selected contaminant. This permits utilization of a measurement technique known as the Standard Addition Method to quantify the unknown concentration. The Standard Addition Method compares the IMS measurement of the unknown concentration level to the known concentration level in a manner that eliminates the effects of charge transfer reactions on the result. This embodiment of the present invention can also be used to calibrate the IMS sensor by establishing which ionogram structures result from the presence of a particular analyte in the sample stream. A known concentration of an analyte is introduced into the sample stream. The resulting ionogram is compared to an ionogram recorded with no contaminants present. By comparing these spectra, a correlation can be made between the positions of features in the ionogram and the analyte which gives rise to these features.

Another preferred embodiment of the present invention provides a recirculating filtration system for use with a transportable IMS sensor of the design disclosed in U.S. Patent No. 5,420,424 that is configured for use in gas chromatography applications. That embodiment also provides a heating device for significantly minimizing the effects of adsorption taking place on the IMS sample stream inlet surface. This decreases the IMS sensor's response time and recovery time characteristics with regard to detecting rapidly changing analyte concentration levels. The device provides heating to the IMS sensor's sample stream inlet to increase the temperature of the sample stream inlet surface. This increased temperature results in less time between adsorption and desorption of the analyte on the sample stream inlet surface, which causes a greater portion of the overall analyte concentration level to be detected by the IMS sensor. This results in a significant reduction in the time necessary for the analyte to reach equilibrium density on the sample stream inlet surface, thus decreasing the IMS sensor's response time and recovery time characteristics with regard to detecting rapidly changing concentration levels. The heating device may be optionally configured with a flow smoothing insert for reducing the turbulence in the fluid stream flow entering the IMS sensor's carrier stream plenum inlet. Elimination of this turbulence is necessary in order to prevent mixing of the carrier and sample fluid streams in the ion filter, which would otherwise adversely affect the IMS sensor's sensitivity due to the impurities present in the sample fluid stream. Without the use of a flow smoothing insert, a reduction of the carrier stream flow is necessary to eliminate this turbulence, which in turn adversely affects the IMS sensor's sensitivity. This decreased sensitivity is caused by the increased amount of time required for the ionized substance to traverse the ion filter. Extending the time interval which ions spend in the ion filter allows more time for loss mechanisms (such as diffusion to the filter's walls and charge neutralization reactions) to attenuate the ion current which reaches the ion detector. The flow smoothing insert thus reduces turbulence in the carrier stream flow, allowing a return of the flow to a level that restores the IMS sensor's sensitivity.

### SUMMARY OF THE INVENTION

Generally, the present invention provides a recirculating filtration system for use with a transportable ion mobility spectrometer. A first preferred embodiment of the transportable recirculating filtration system comprises a pump connected with a set of filters and flow sensors to an ion mobility spectrometry sensor preferably of the design disclosed in U.S. Patent 5,420,424. The IMS sensor's outlet flow is cleaned by the filters and recirculated by the pump back into the IMS sensor as the carrier fluid stream flow. A portion of the IMS sensor's outlet flow equal to the amount of flow introduced into the sensor is exhausted from the filtration system to maintain a constant total flow volume through the system as the sample is being taken.

A second preferred embodiment of the present invention provides a transportable recirculating filtration system for measuring an unknown concentration of a selected ionizable contaminant substance such as benzene present in a sample fluid stream in which other substances may coexist. The filtration system of this alternate preferred embodiment comprises a pump connected with a set of filters, flow sensors, and a plurality of valves to a device for introducing a controlled concentration of the selected ionizable contaminant into an ion mobility spectrometry sensor preferably of the design disclosed in U.S. Patent 5,420,424. The measurement of an unknown concentration of the selected contaminant preferably comprises the following steps: (1) combining the controlled contaminant concentration with an unknown concentration of the same contaminant to measure the IMS sensor's response to the combined controlled and unknown concentrations; (2) measuring the IMS sensor's response to only the unknown concentration; and (3) determining this unknown concentration by comparing the measurement in step (1) to the measurement in step (2). This embodiment of the present invention also provides a recirculating filtration system which can be used to calibrate the IMS sensor by establishing which ionogram structures result from the presence of a particular analyte in the sample stream. A known concentration of an analyte is introduced into the sample stream. The resulting ionogram is compared to an ionogram recorded with no contaminants present. By comparing these spectra, a correlation can be made between the positions of features in the ionogram and the analyte which gives rise to these features.

A third preferred embodiment of the present invention provides a recirculating filtration system for use with a transportable IMS sensor of the design disclosed in U.S. Patent No. 5,420,424 that is configured for use in gas chromatography applications. The gas chromatograph is preferably comprised of a multicapillary column containing a coating comprised of a stationary phase substance. The multicapillary column is in communication with the IMS sensor sample stream inlet for transmitting an unknown concentration level of at least one analyte into the IMS sample stream inlet to be measured by the ion mobility spectrometer. A source of carrier gas in communication with a sample injector entrains the analyte in the sample injector for transport into the multicapillary column. The analyte is soluble in the stationary phase substance such that transport of the analyte into the IMS sample stream inlet is delayed by a predetermined "retention time" interval in the multicapillary column. Variation in the retention time between different analyte species allows the IMS sensor to accurately measure the individual concentrations of the various analyte species since the entry of each analyte species into the IMS sample stream inlet will be staggered as compared to the other species present in the sample stream.

Preferably, the multicapillary column is sealed to a heated transfer line leading to the sample stream inlet of the IMS sensor. The transfer line is preferably maintained at a temperature 10°C - 40°C above that of the multicapillary column in order to ensure that analyte species will not adsorb on the walls of the transfer line instead of entering the sample stream inlet of the IMS sensor. The transfer line can be optionally configured with a flow smoothing insert to produce a laminar flow profile throughout the volume between the transfer line outlet end and the IMS sensor housing upon exit of the IMS carrier flow stream from the flow smoothing insert. The heating provided by the transfer line also increases the temperature of the sample stream inlet surface to reduce the amount of time between adsorption and desorption taking place on the surface. This significantly improves the ability of the IMS sensor to follow rapidly changing analyte concentration levels. The inlet heating device comprises a hollow metal passageway for passage of a sample fluid stream from the outside environment into the sample stream inlet of the ion mobility spectrometer. A hollow metal housing is preferably hermetically welded to both the passageway inlet and outlet ends for mounting the device to the sample stream inlet of the ion mobility spectrometer using a ceramic flange. A heating element preferably comprised of a high resistance wire surrounds the surface of the passageway for electrically heating the passageway. A temperature control circuit controls electrical power input to the heating element to maintain the passageway at a substantially constant reference value. The temperature control circuit comprises at least one temperature measuring device, preferably an electrical resistance-measuring thermometer, attached to the surface of the passageway for measuring the temperature of the passageway. A temperature controller having an input electrically connected to the temperature measuring device and an output electrically connected to the heating element compares the temperature measured by the temperature measuring device to a predetermined reference value and adjusts the electrical power input to the heating element to substantially match the temperature of the passageway to the reference value.

The heated transfer line is optionally provided with a flow smoothing, device for decreasing the turbulence present in the fluid flow entering the IMS sensor's carrier stream inlet. This flow smoothing insert permits increasing the fluid flow rate entering the IMS sensor's carrier stream inlet to levels which maximize the IMS sensor's measurement sensitivity without causing mixing of the sample and carrier fluid stream flows. The flow smoothing element comprises an insert of porous material, preferably a disc- shaped metal mesh with a center opening that fits over the housing of the heating device, which is placed between the heating device housing and the surface of the sample stream inlet at a location proximate to the outlet end of the heating device. The flow smoothing insert fills the gap between the heating device housing and the sample stream inlet plenum surface, causing the velocity of the fluid stream flow entering the carrier stream inlet to be equalized across the outlet side of the flow smoothing element to eliminate flow turbulence. Preferably, the flow smoothing insert is electrically isolated from the IMS sample stream inlet plenum surface by a band of electrically insulating material placed between the insert and the IMS sample stream inlet surface.

Other details, objects, and advantages of the present invention will become apparent in the following description of the presently preferred embodiments.

### BRIEF DESCRIPTION OF THE DETAILED DRAWINGS

In the accompanying drawings, the preferred embodiments of the present invention and preferred methods of practicing the present invention are illustrated wherein:
Figure 1 is a schematic fluid system diagram of a first preferred embodiment of the present invention which provides a recirculating filtration system for use with a transportable IMS sensor.
Figure 2 is a schematic fluid system diagram of a second preferred embodiment of the present invention providing a portable recirculating filtration system for measuring an unknown concentration of a selected ionizable contaminant substance when present in a sample fluid stream in which other substances may coexist.
Figure 3 is a schematic fluid system diagram of a third preferred embodiment of the present invention which provides a recirculating filtration system for use with a transportable IMS sensor in gas chromatography applications.
Figure 4 is a cross-sectional view of a preferred heating device for the present invention.
Figure 5 is a cross-sectional view of an alternate embodiment of a heating device as configured with a flow smoothing insert.
Figure 6 is a simplified representation of an IMS sensor's response time and recovery time characteristic in detecting a stepwise increase in the concentration of the analyte with and without heating of the ionization chamber inlet.
Figure 7 is a graph of the temperature profile across a preferred heating device.
Figure 8 is a graph illustrating the effect of the use of a preferred inlet heating device on an IMS sensor's response time and recovery time characteristic to changes in analyte concentration levels.
Figure 9A shows a typical set of data collected by an IMS sensor without a flow smoothing insert attached to the heating device; and
Figure 9B shows the increased sensitivity of an IMS measurements with a flow smoothing insert attached to the heating device.

### DETAILED DESCRIPTION OF THE PRESENTLY PREFERRED EMBODIMENTS

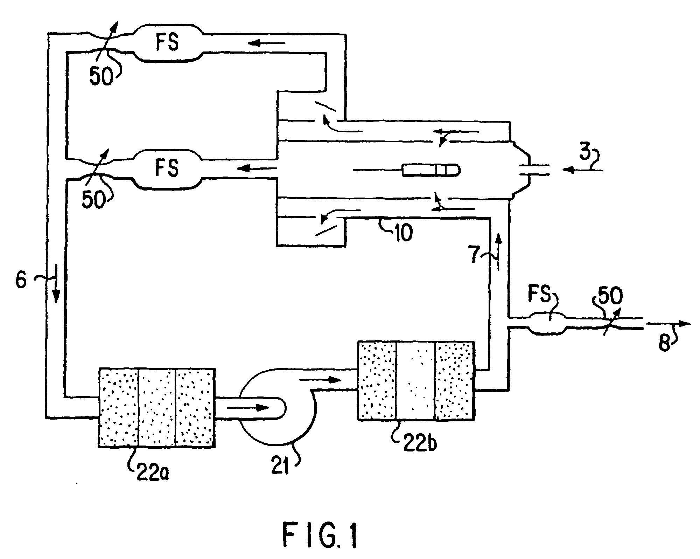

Figure 1 shows a first preferred embodiment of the present invention, which provides a recirculating filtration system for use with a transportable IMS sensor. The embodiment shown in Figure 1 comprises a pump 21 in combination with a set of filters 22a and 22b in the inlet and outlet streams thereof, respectively, along with a plurality of flow sensors FS and flow adjustment valves 50 all in communication with an ion mobility spectrometry (IMS) sensor **10.** IMS sensor **10** is preferably of the design described in U.S. Patent 5,420,424. The IMS sensor's outlet fluid flow stream **6** is purified and recirculated back into the IMS sensor **10** as the carrier fluid stream flow **7** described in U.S. Patent 5,420,424. A portion of the **IMS** sensor's outlet fluid flow stream **6** equal to the amount of sample fluid stream flow **3** introduced into the IMS sensor **10** is removed as exhaust 8 from the filtration system, thereby maintaining a constant total flow rate through the system as the sample is being taken. The flow rates of the sample **3** and exhaust **8** fluid streams are typically in the range of 10 to 500 milliliters per minute, while typical carrier fluid stream **7** flow rates are in the range of 2 to 4 liters per minute.

Pump **21**, preferably of the ASF Model No. 5010 or 7010 Oil-less Diaphragm Pump design, circulates fluid stream flow through the system. Filters **22a** and **22b,** preferably consisting of 100 to 500 cubic centimeters (cc) of activated charcoal combined with 200cc to 1000cc of combined type 5A and 13X molecular sieve, clean the outlet fluid flow stream **6** prior to recirculation back into the IMS sensor **10** as the carrier gas **7** described in U.S. Patent 5,420,424. A plurality of flow sensors FS, preferably Honeywell Model AWM3000 or AWM5000 series mass flow sensors, are installed to measure flow rates at various points throughout the system. A plurality of flow adjustment valves **50**, preferably Model No. SS-2MG4 valves manufactured by Newpro, Inc., are adjusted to initially set the various flow rates in the system to their proper values. These valves **50** are then left at their initial positions during use of the system in making IMS measurements.

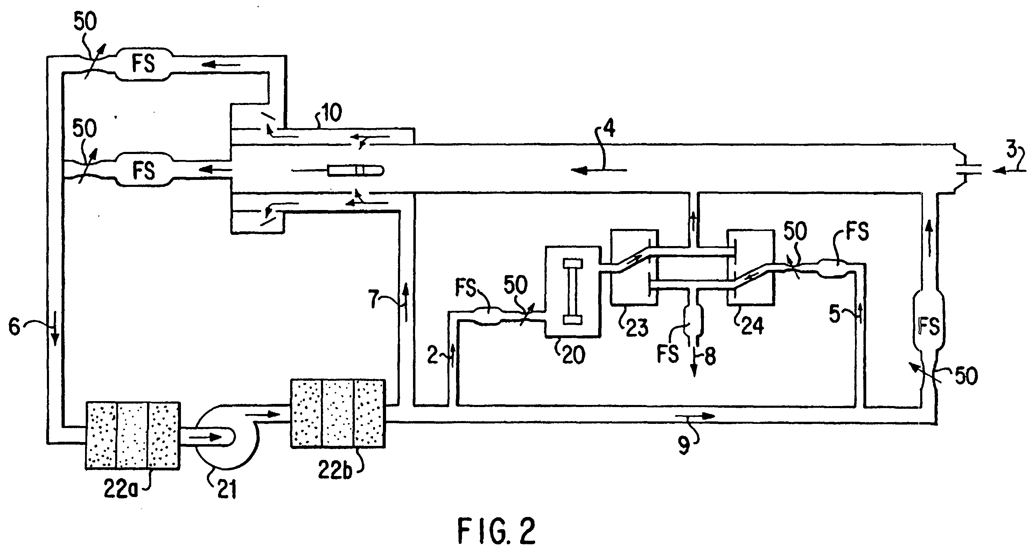

The recirculating filtration system displayed in Figure 1 will permit operation of a portable IMS sensor for the detection of selected atmospheric contaminants in remote locations. However, the accuracy of the sensor's concentration measurement can be adversely affected by charge transfer reactions which occur between the ionizable contaminant of interest and other ionizable species present in the ambient air sample. Figure 2 displays a second preferred embodiment of the present invention, which eliminates the effect of charge transfer reactions on the selected ionizable contaminant substance to permit accurate measurement of an unknown concentration level Cs of the selected contaminant in a sample fluid stream flow **3** in which other substances may coexist.

The recirculating filtration system of Figure 2 is also preferably designed for use with the IMS sensor **10** disclosed in U.S. Patent No. 5,420,424. The filtration system of Figure 2 preferably comprises a permeation calibration device **20,** a pump **21,** a set of filters **22a** and **22b,** flow sensors **FS,** and two three-port two-way solenoid valves **23** and **24** with interconnecting fluid flow passageways and flow adjustment valves **50.** Preferably, a conventional permeation calibration device **20,** such as that disclosed in U.S. Patent Nos. 4,399,942 or 4,715,217, introduces a controlled concentration **Cpd** of the selected ionizable contaminant substance, by way of fluid stream **2**, into the total flow **4** entering the sample stream inlet of the IMS sensor. Fluid stream **2** passes through permeation calibration device **20** to permit calibration of the IMS sensor **10** response to that expected for the ion concentration introduced, and to permit use of the Standard Addition Method in calculating an unknown concentration of the selected contaminant as measured by the IMS sensor **10**. Other means of introducing a controlled concentration **Cpd** of the selected ionizable contaminant into the system that can be used are diffusion vials, diffusion tubes, standards from pressurized calibration cylinders, and other methods such as those disclosed in Gas Mixtures: Preparation and Control, by Gary O. Nelson (1992).

Preferably, the permeated fluid making up the controlled concentration **Cpd** consists of a substance such as benzene, contained in the permeation calibration device **20** in liquid form and released into the calibration fluid stream **2** in gaseous form, but the filtration system design shown in Figure 2 can also be adapted for the use of volatile solids or volatile liquids having a boiling point between 40°C and 125°C, as well as other single phase gases, two-phase solid gas systems or two-phase liquid gas systems desired for use as the permeated fluid. In addition to the permeated fluid, the calibration stream 2 preferably consists of an inert gas or an inert mixture of gases such as that found in dehumidified air which has been filtered through activated charcoal. Typical permeated fluid emission concentrations are between 0.1 and 10 parts per million for calibration fluid stream 2 flow rates in the range of 50 to 200 milliliters per minute.

Pump **21**, preferably of the ASF Model No. 5010 or 7010 Oil-less Diaphragm Pump design, circulates flow through the system. Filters **22a** and **22b,** which preferably consist of 100 to 500 cubic centimeters (cc) of activated charcoal combined with 200 to 1000 cc of combined type 5A and 13X molecular sieve, clean the outlet fluid stream flow **6** from the IMS sensor **10** prior to recirculation back into the IMS sensor **10** as the carrier fluid stream 7 described in U.S. Patent 5,420,424. A first portion of the cleaned outlet flow **6** not introduced into the carrier fluid stream **7** is circulated through the permeation calibration device **20** as the calibration stream **2** and then into the total flow **4** entering the sample stream inlet of the **IMS** sensor **10.** A second portion of the cleaned outlet flow **6** not introduced into the carrier fluid stream **7** is recirculated back into the total flow **4** entering the sample stream inlet of the IMS sensor **10** as the makeup component **5** of the recirculated dilution flow **9** that dilutes the sample **3** to the level necessary for measurement of the unknown concentration. A third portion of the cleaned outlet flow **6** not introduced into the carrier stream **7** is removed as exhaust **8** from the filtration system to maintain a constant total flow volume through the system as the sample is being taken. This exhaust flow **8** is equal to the amount of sample fluid stream flow **3** introduced into the IMS sensor **10**. Sample **3** and exhaust **8** fluid stream flow rates delivered by the system are typically in the range of 10 to 500 milliliters per minute, while typical carrier fluid stream **7** flow rates are in the range of 2 to 4 liters per minute.

A plurality of flow sensors **FS**, preferably Honeywell Model AWM3000 or AWM5000 series mass flow sensors, are installed to measure flow at various points throughout the system. A plurality of flow adjustment valves **50** are adjusted to initially set the various flow rates in the system to their proper values. These valves **50** are then left at their initial positions during use of the system in making IMS measurements. Valve **23**, preferably of the design type LHDA1211111H manufactured by the Lee Company, directs the calibration fluid stream **2** from the permeation calibration device **20** into the total flow **4** entering the sample stream inlet of the IMS sensor **10,** or out of the system as required. Valve **24,** again preferably of the Lee LHDA1211111H design type, adjusts the makeup component **5** of the recirculated dilution flow **9** such that a constant total IMS sample stream inlet flow **4** is maintained for comparing the controlled concentration of the selected contaminant present in the calibration flow **2** to the unknown concentration to be measured in the sample **3.** This constant total IMS sample stream inlet flow **4** permits use of the Standard Addition Method in calculating the unknown concentration **Cs** from the known controlled concentration **Cpd.** A conventional **IMS** sensor **10** will work with the system, but the preferred embodiment is designed for use with the IMS sensor disclosed in U.S. Patent No. 5,420,424.

The measurement of an unknown concentration of the selected contaminant preferably comprises the following steps: (1) combining the controlled contaminant concentration with an unknown concentration of the same contaminant to measure the IMS sensor's response to the combined controlled and unknown concentrations; (2) measuring the IMS sensor's response to only the unknown concentration; and (3) determining this unknown concentration by comparing the measurement in step (1) to the measurement in step (2).

In the first step, valve **23** is positioned to introduce controlled concentration **Cpd** into the total flow **4** entering the IMS sample stream inlet. Valve **24** is positioned to divert makeup flow **5** out of the system as the exhaust **8.** The positioning of valve **24** permits the sample **3** to be introduced into the total flow **4** entering the **IMS** sample stream inlet. The positioning of valve **24** in concert with the pre-adjustment of the valves **50** causes the sample flow **3** to equal 10% of the total flow **4** entering the **IMS** sample stream inlet. This 10% dilution factor is necessary to dilute the unknown concentration of the selected contaminant in the sample **3** to a level that will ensure a linear response of the IMS sensor **10** to changes in the unknown concentration level, but the flow rates preset by the valves **50** could be adjusted to provide for other dilution factors. The IMS sensor **10** measures the combined signal output **Stotal** produced by ionization of both the controlled concentration **Cpd** and the unknown concentration **Cs** of the selected contaminant. **Stotal** can be characterized by the equation **Stotal** = **Spd + Ss = A*Cpd** + 0.1*A*Cs. **A** is a constant of proportionality between the electrical signal output **S** of the IMS **10** and the contaminant concentration C and is generally unknown due to its dependence on charge transfer reactions. The signal output Ss produced by the unknown concentration Cs reflects the 10% dilution factor created by valve **24**.

In the second step, valve **23** is repositioned to direct calibration flow **2** out of the system. Valve **24** is repositioned to reinstate maximum makeup flow **5** in combination with the sample **3** as the total flow **4** entering the IMS sample stream inlet. The amount of increased makeup flow **5** provided by valve **24** compensates for the amount of calibration flow **2** redirected out of the system to keep the sample flow **3** equal to 10% of the total flow **4** entering the IMS sample stream inlet. The IMS sensor **10** measures the signal output **Ss** produced by ionization of only the unknown concentration **Cs** of the selected contaminant. **Ss** can again be characterized by the equation **Ss** = **0.1*A*Cs** as described above.

After performance of the above described measurement sequence, the unknown concentration **Cs** of the selected contaminant present in the sample **3** is calculated by the Standard Addition Method. Since the controlled concentration **Cpd** is known, the unknown contaminant concentration **Cs** can be readily obtained by comparing signal output **Ss** to the combined signal output **Stotal**. This unknown concentration **Cs** is calculated by solving the equation **Cs** = **10*Cpd/(R-1)** where **R** = **Stotal/Ss.** Use of the Standard Addition Method to calculate the unknown concentration **Cs** corrects for the effects of charge transfer reactions on the IMS concentration measurement by eliminating the necessity of arriving at a value for generally unknown proportionality constant **A**. This calculation can be performed by means of an-algorithm run on a computer processor by computer software programmed for this purpose that is stored on a computer-readable storage medium. Other means of calculating the unknown contaminant concentration **Cs** of the selected contaminant are also possible, such as use of an electronic integrated differential amplifier circuit, an analog or a combined analog and digital comparison circuit comprised of discrete electrical and digital logic components, or other similar circuitry presently in the state of the art.

The second preferred embodiment of the present invention shown in Figure 2 also provides a recirculating filtration system which can be used to calibrate the **IMS** sensor **10** by establishing which ionogram structures result from the presence of a particular analyte in the sample stream. A known concentration of an analyte is introduced into the sample stream **3**. The resulting ionogram is compared to an ionogram recorded with no contaminants present. By comparing these spectra, a correlation can be made between the positions of features in the ionogram and the analyte which gives rise to these features. Calibration of the IMS sensor **10** is accomplished by introducing only the controlled concentration **Cpd** of the selected contaminant into the **IMS**. This allows correlating the compensation voltage to generate an ionogram from the measurements taken by the **IMS** sensor **10**. In the calibration step, valve **23** is positioned to introduce controlled concentration **Cpd** present in the calibration fluid stream **2** into the total flow **4** entering the **IMS** sample stream inlet. Valves **23** and **24** are positioned to provide maximum makeup flow **5**. The lack of exhaust flow **8** out of the system prevents the entry of sample flow **3** into the **IMS 10.** The total **IMS** sample stream inlet flow **4** is passed through the **IMS** sensor **10** to calibrate the **IMS** sensor **10** output **Spd. Spd** can be characterized by the equation **Spd** = **A'*Cpd** where **A'** is a constant of proportionality similar to that described above but which has a different value due to a different composition of the total **IMS** sample stream inlet flow **4**. Use of this equation allows comparison of **Spd** to the output anticipated from ionization of only the controlled concentration **Cpd** of the selected contaminant. The resulting ionogram is compared to an ionogram recorded with no contaminants present. By comparing these spectra, a correlation can be made between the positions of features in the ionogram and the analyte which gives rise to these features.

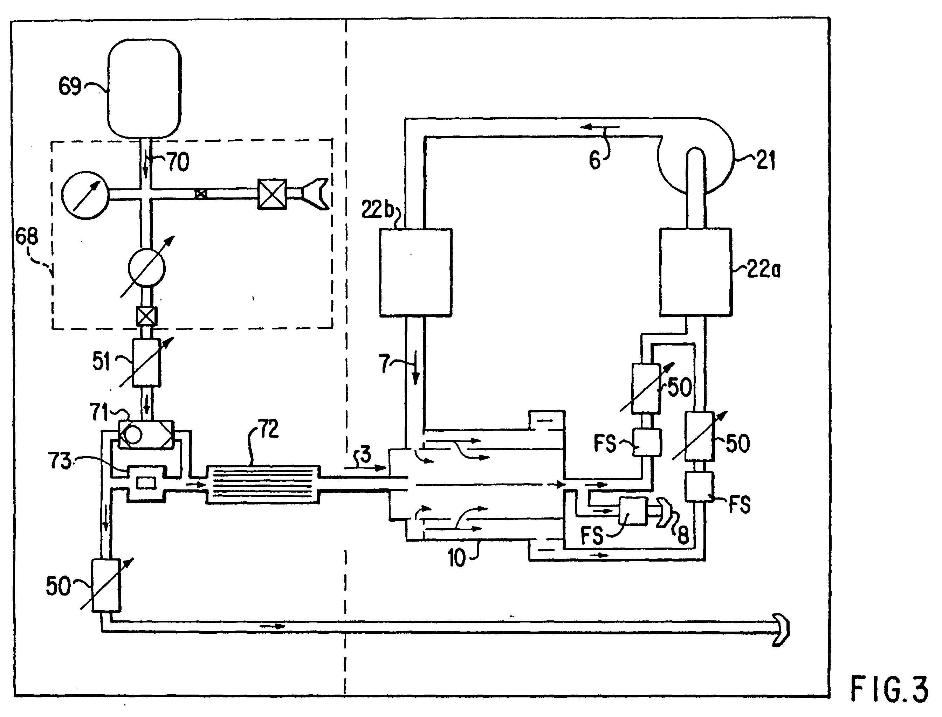

**Figure 3** shows a third preferred embodiment of the present invention which provides a recirculating filtration system for use with a transportable **IMS** sensor in gas chromatography applications. The third preferred embodiment shown in **Figure 3** again comprises a pump **21** in combination with filters **22a** and **22b** in the inlet and outlet streams thereof, respectively, along with a plurality of flow sensors **FS** and flow adjustment valves **50** all in communication with an **IMS** sensor **10**. **IMS** sensor **10** is again preferably of the design described in U.S. Patent 5,420,424. The **IMS** sensor's outlet fluid flow stream **6** is again purified and recirculated back into the **IMS** sensor **10** as the carrier fluid stream flow **7** described in U.S. Patent 5,420,424. A portion of the outlet fluid flow stream **6** again equal to the amount of sample fluid stream flow **3** introduced into the **IMS** sensor **10** is removed as exhaust **8** from the filtration system, thereby maintaining a constant total flow rate through the system. The flow rates of the sample **3** and exhaust **8** fluid streams are typically in the range of 10 to 100 milliliters per minute, while typical carrier fluid stream **7** flow rates are in the range of 2 to 4 liters per minute.

Pump **21**, again preferably of the ASF Model No. 5010 or 7010 Oil-less Diaphragm Pump design, circulates fluid stream flow through the system. Filters **22a** and **22b**, again preferably consisting of 100cc to 500cc of activated charcoal combined with 200cc to 1000cc of combined type 5A and 13X molecular sieve, clean the outlet fluid flow stream **6** prior to recirculation back into the **IMS** sensor **10**. A plurality of flow sensors **FS**, preferably of the Honeywell Model AWM3000 design, are installed to measure flow rates at various points throughout the system. A plurality of flow adjustment valves **50**, preferably Model No. SS-2MG4 valves manufactured by Newpro, Inc., are adjusted to initially set the various flow rates in the system to their proper values. These valves **50** are then left at their initial positions during use of the system in making IMS measurements.

As shown in **Figure 3**, sample fluid stream flow **3** originates from a source of high pressure carrier gas **70** and is injected through an injection solenoid valve **71** into a gas chromatograph preferably comprised of a multicapillary column **72.** Carrier gas **70** is preferably injected into the multicapillary column **72** by way of a sample injector **73** prior to entering the sample stream inlet of the **IMS** sensor **10.** Due to the preferred design of the system, the sample fluid stream flow rate **3** through the multicapillary column **72** will be equal to the exhaust fluid stream flow rate **8** and is controlled by means of an adjustable orifice flow restrictor valve **51** located in series with valve **71** and preferably manufactured by the Sibertech Company, Novosibirsk, Russia. Valve **71**, which is preferably of the two-way three-port injection solenoid design manufactured by the Sibertech Company either: (i) is positioned to bypass sample injector **73** to allow pure carrier gas **70** to enter the **IMS** sensor **10** as the sample fluid stream flow **3**, or alternately (ii) is positioned to allow the carrier gas **70** to pass through the sample injector **73** to entrain the analyte to be processed by the **IMS** sensor **10.** Although a multicapillary column design is used as the gas chromatograph in the preferred embodiment, other single capillary and packed column designs in the current state of the art are acceptable for use, so long as a means of flow and temperature control are provided similar to that described herein, and 'so long as the gas chromatograph is hermetically sealed to the sample stream inlet of the **IMS** sensor.

The carrier gas **70** is introduced into the flow system at high pressure by means of a conventional pressure regulator and relief valve arrangement. The preferred embodiment utilizes a pressure regulator and relief valve system manufactured by Sibertech Company. Pressure in tank **69** is reduced by the pressure regulator **68** from 100 to 2500 psia at the outlet of tank **69** to 15 to 25 psig at head of the multicapillary column **72.** The carrier gas **70** is preferably inert such as pure nitrogen or it can be ultrapure air. The disadvantage of using nitrogen as the carrier gas **70** is that when the instrument is first turned on some air will already be present in the **IMS** sensor **10** flow system. As the instrument operates, the pure nitrogen carrier gas will mix with and gradually displace this air. During this period, the composition of the recirculating gas in the IMS sensor **10** flow system will gradually shift from air to nitrogen. However, stable readings cannot be achieved with the **IMS** sensor **10** until the composition of the recirculating gas for the **IMS** sensor **10** is stable. Thus operation with nitrogen as the carrier gas **70** would extend the time required for the **IMS** sensor **10** to reach stable operation. Ultrapure air is the source of carrier gas **70** used in the preferred embodiment.

The sample injector **73** is a hollow container preferably made of metal such as stainless steel and having one wall which is hermetically sealed to the multicapillary column **72**. In one configuration, a second wall of the sample injector **73** is comprised of a septum membrane. This membrane is preferably made of silicon or other similar materials such as a Teflon-type elastomer. A gas or liquid sample to be processed by the **IMS** sensor **10** is preferably injected through the membrane by means of syringe. Since the sample injector **73** is at an elevated temperature (100°C or greater), liquid samples quickly vaporize once they enter the sample injector **73** volume. In an alternate arrangement, the membrane wall of the sample injector is removed and a sampling cartridge is inserted into the injector. Once in the sample. injector **73** the cartridge is rapidly heated, desorbing materials which have been collected on the cartridge's wire mesh collecting surface. In either configuration, the vapor samples present in sample injector **73** are forced onto the multicapillary column **72** by momentarily supplying a pulse of carrier gas **70** to the sample injector **73** volume. The sample fluid stream flow **3** entering the sample stream inlet of the **IMS** sensor **10** is thus a mixture of carrier gas **70** entrained with unknown concentrations of one or multiple analytes to be analyzed. Sample fluid stream flow **3** exiting the sample injector **73** is preferably introduced at a rate of 10-100 ml/min and preferably between 50 and 80 ml/min into the multicapillary column **72**. The multicapillary column **72** is preferably a hollow bundle of glass capillary tubes that contain a lining known as the stationary phase. These glass tubes range from approximately 25 to 100 micrometers (um) in inner diameter (ID) and are preferably approximately 40 um in ID. The stationary phase can be comprised of substances such as SE-30, SE-54 or carbowax 20M, with SE-54 being used in the preferred embodiment.

In operation of the system, the carrier gas **70** first passes through the sample injector **73** where samples of the analyte are injected in a pulse-like manner into the carrier gas **70** thereby giving rise to spatially separated carrier gas "slugs" containing various species of the entrained analyte. These entrained analyte carrier gas slugs are then passed through the multicapillary column **72** at the carrier gas **70** flow rate. The molecules comprising the various analyte species present in the sample injector **73** are each soluble to differing extent in the stationary phase substance. Thus all the analyte species entrained in a given carrier gas slug will undergo numerous passages in and out of solution with the stationary phase substance as the carrier gas slug transits the length of the multicapillary column **72**. Each analyte species of interest will experience a transit time through the multicapillary column **72** different from the other analyte species present in that carrier gas slug due to the differing extent to which each analyte species is soluble in the stationary phase. This transit time is known as the "retention time" for that particular analyte species. This variation in retention times allows the **IMS** sensor to achieve improved selectivity in distinguishing between the various analyte species entrained in the carrier gas **70** since the entry of each analyte species into the sample stream inlet of the IMS sensor **10** will be staggered as compared to the other species present in the carrier gas **70**. Thus the **IMS** sensor **10** is required to respond to only a single analyte species at a time thereby preventing a degradation in the **IMS** measurement by the other species present in the analyte sample.

The multicapillary column **72** is heated by a surrounding oven and maintained within a selected temperature falling within the band of 100-180°C to ensure the optimum retention time distribution for the various analyte species of interest. The multicapillary column **72** is hermetically sealed to a transfer line **74** leading to the sample stream inlet of the **IMS** sensor **10**. Transfer line **74** is preferably maintained at a temperature 10°C - 40°C above (and most preferably 10°C above) that of the multicapillary column **72** in order to ensure that analyte species will not adsorb on the walls of the transfer line **74** instead of entering the sample stream inlet of the **IMS** sensor **10**.

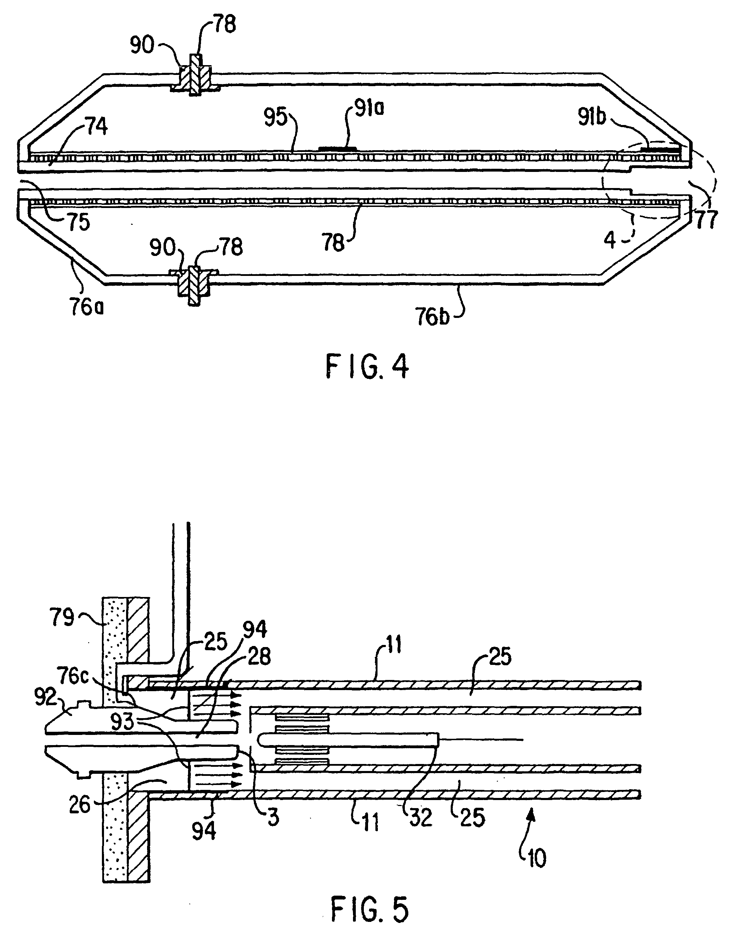

**Figure 4**, shows a preferred embodiment of the heated transfer line **74**. It has a heating element **78** of one or more sections of insulated, high resistance wire, preferably 0.02 inch diameter tetraflouroethylene (TFE)-coated Constantan thermocouple wire, wound around the heated passageway of the transfer line **74** from the inlet end **75** to the outlet end **77** to provide electrical heating to the transfer line passageway **74**. Other metals such as platinum that can be formed as a thin film surrounding the transfer line **74** could be used for the heating element **78**. In addition, a flexible heating element **78** in which the thin metal film is embedded in a material such as a clear polyimide film, a fiber paper aramide, or silicon, rubber could be used. Additionally, the thin metal film heating element **78** could be embedded in a rigid mica shell. The heating element wires **78** of the preferred embodiment is wound in a single or preferably a dual-helix fashion around the transfer line passageway **74**. Preferably, the heating element wires **78** penetrate through holes in two bonded cylindrical half sections **90** of insulating material such as Kel-F plastic that is embedded between metal shells **76a** and **76b**. Alternately, at least one electrical contact pin made of #2-56 stainless steel all-thread rod can be mounted in one or both of the half sections **90**. Metal shells **76a** and **76b** can be welded to transfer line 74 and are preferably supported by the cylindrical half-sections **90** and O-rings (not shown) or other means known in the art. In the preferred embodiment, a layer of teflon tape 95 preferably holds the heating element wires **78** against the transfer line passageway 74 to improve heat transfer efficiency between the heating element wires **78** and the transfer line passageway **74**. To provide a more uniform temperature profile across the length of the passageway **74**, the winding density (or pitch) of the heating element wires **78** in the preferred embodiment is increased near the heating device inlet end **75** and outlet end **77** where heat losses are at their maximum.

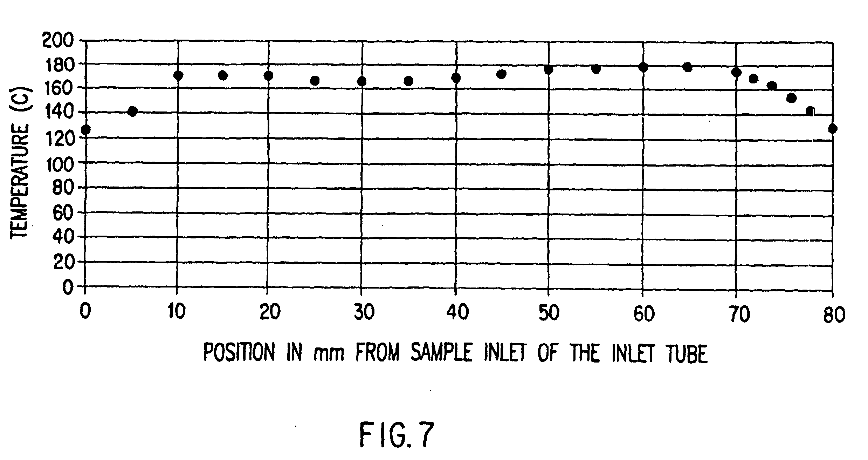

Two wire resistance thermometers **91a** and **91b**, each preferably a Minco Thermal-Ribbon platinum resistance-measuring thermometer Model No. S651PDZ24A, are preferably attached to the transfer line passageway **74** to monitor the temperature of the transfer line **74**. Other components which could be used for the thermometers **91a** and **91b** are a thermocouple, a thermistor, and a semiconductor. The first thermometer **91a** is preferably positioned near the midpoint of the transfer line **74** while the second thermometer **91b** is preferably positioned near the outlet end **77**. The thermometers **91a** and **91b** are preferably connected to a temperature controller which switches power to the heating element section(s) **78** to maintain a substantially uniform temperature profile across the transfer line passageway **74**. A conventional resistance-measuring temperature controller, such as a MINCO Model No. CT-149, preferably compares the temperature measured by the thermometer **91a** or **91b** to a selected setpoint temperature programmed into the temperature controller. The temperature comparison can be performed by means of an algorithm run on a computer processor by computer software programmed for this purpose that is stored on a computer-readable storage medium. Other means of performing the temperature comparison are also possible, such as use of an electronic integrated differential amplifier circuit, an analog or a combined analog and digital comparison circuit comprised of discrete electrical and digital logic components, or other similar circuitry presently in the state of the art. As shown in Figure 7, the temperature control circuitry in the preferred embodiment results in a stabilized temperature profile across the transfer line passageway **74**.

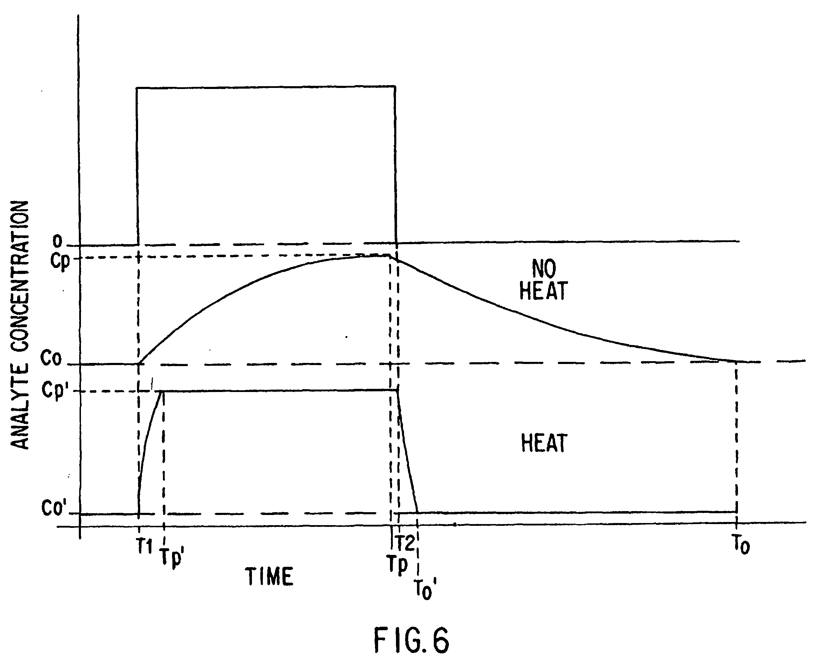

**Figure 6** shows a simplified representation of the **IMS** sensor's response time and recovery time characteristic to a stepwise increase and decrease in the concentration of the analyte with and without heating of the **IMS** sensor **10** ionization chamber inlet of U.S. Patent No. 5,420,424 . As can be seen from Figure 6, the IMS sensor's response exhibits a time lag from the point **T1** when the concentration is increased to the point **Tp** when the IMS sensor's response initially reaches its peak value **Cp**. This time lag is due to adsorption of the analyte on the **IMS** sensor ionization chamber surface as the sample passes from the outside environment into the **IMS** sensor. This adsorption results in less of the analyte being available for ionization and detection than is actually present in the sample. The peak IMS sensor response **Cp** is obtained when the concentration level of the analyte on the **IMS** sensor ionization chamber surface has achieved an equilibrium density that corresponds to the increased concentration level of the analyte present in the sample. At the time Tp when the equilibrium density is reached, adsorption of the analyte taking place on the **IMS** sensor's sample stream inlet surface is balanced by desorption of the analyte from the sample stream inlet so that no net adsorption of the analyte is occurring. This causes the full amount of the analyte entering the **IMS** sensor ionization chamber to be available for ionization and detection.

The increase in the analyte concentration is then eliminated at a point in time **T2** very soon after the equilibrium point **Tp** is reached. This stepwise decrease in the original concentration level causes the reverse effect to take place and results in an additional time lag until the original analyte concentration level **Co** is detected by the **IMS** sensor at time **To**. In that case gradual release of the desorbed analyte from the **IMS** sensor ionization chamber surface results in more of the analyte being available for ionization and detection than is actually present in the sample. The original-**IMS** sensor response **Co** is obtained when the concentration level of the analyte on the ionization chamber surface has returned to the equilibrium density corresponding to the original concentration level of the analyte present in the sample. The time lag in either case is directly dependent on the temperature inside the **IMS** sensor inlet. A greater temperature results in less time between adsorption and desorption taking place on the ionization chamber surface and a consequently smaller period of elapsed time until equilibrium is reached. The heating device shown in **Figure 4** provides a means for increasing the temperature inside the **IMS** sensor inlet to minimize the time lag experienced in the detection of a change in analyte concentration level.

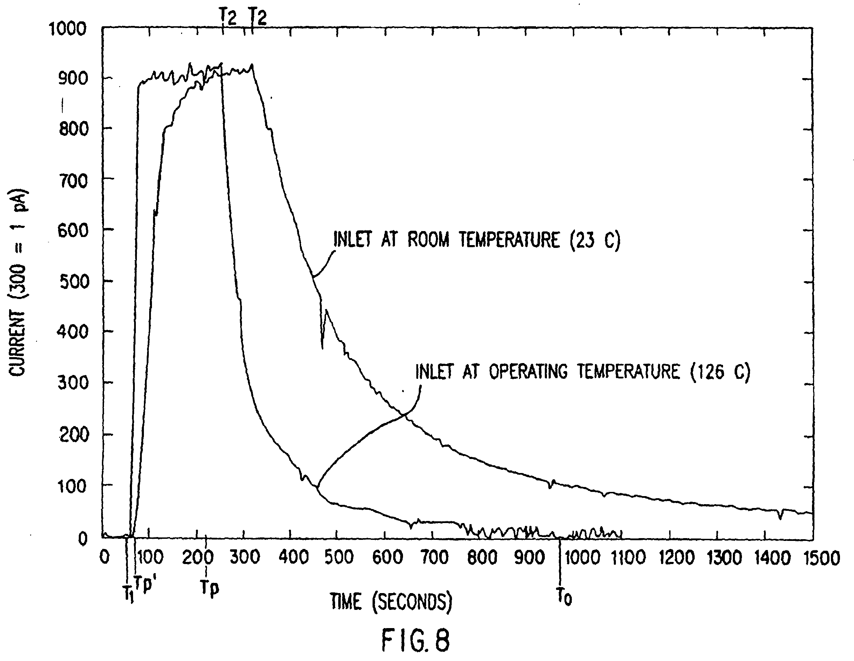

**Figure 8** illustrates the effect of using a heated inlet transfer line **74** or **92** such as that shown in **Figure 4** or **Figure 5**, respectively, on the **IMS** sensor's response to changes in analyte concentration levels. The use of the heated transfer line **74** or **92** to heat the **IMS** sensor **10** inlet to a typical operating temperature (approximately 126C) causes an approximately tenfold improvement in the **IMS** sensor's response time when compared to maintaining the inlet at room temperature (as indicated by the time interval from **T1** to **Tp'** with use of the heated transfer line as opposed to the time interval from **T1** to **Tp** without the heated transfer line installed). As can be seen from **Figure 8**, the **IMS** sensor's recovery time characteristic is also improved by use of the inlet heated transfer line (as indicated by the time interval from **T2'** to **To** with use of the heated transfer line as opposed to the time interval from **T2** to a point beyond the end of the graph without the heated transfer line installed).

In order to prevent degradation of the **IMS** sensor's sensitivity, mixing of the carrier and sample fluid stream flows must be prevented as the carrier stream enters the **IMS** sensor's analytical gap from the **IMS** carrier stream plenum, as described in U.S. Patent No. 5,420,424. This is necessary in order to prevent impurities present in the sample fluid stream from entering the analytical gap and adversely affecting the **IMS** sensor ion detector measurement. To achieve the segregation of carrier and sample stream flows, the amount of flow entering the **IMS** carrier stream plenum typically exceeds the portion of the carrier stream flow entering the analytical gap 25 by 1 to 1.5 liters per minute. However, in order to prevent degradation of the sensitivity (i.e. change in signal amplitude per unit change in analyte concentration), the **IMS** carrier stream plenum flow must be on the order of 3 to 4 liters per minute. Lowering this flow level results in additional time for the ions to traverse the **IMS** sensor analytical gap to the ion detector, which permits more of the ions to migrate to the analytical gap walls due to diffusion or to undergo charge neutralization reactions and thus escape measurement by the ion detector. Use of a inlet heated transfer line **74** or **92** such as that shown in **Figures 4 and 5**, respectively, makes it difficult to prevent adegradation in the sensitivity of the IMS sensor's response while at the same time avoiding mixing of the carrier and sample stream flows, since the maximum **IMS** carrier stream plenum flow possible without causing mixing is approximately 1.8 liters per minute. Mixing is caused at higher carrier stream flow levels due to the turbulence created by the blunt shape of the heating device outlet end **77** shown in **Figure 4**.

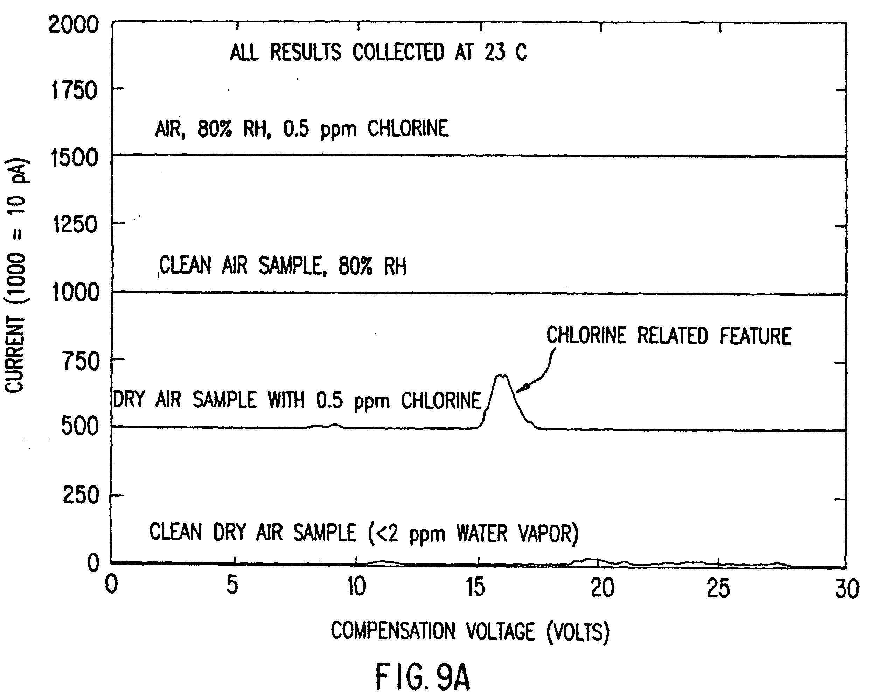

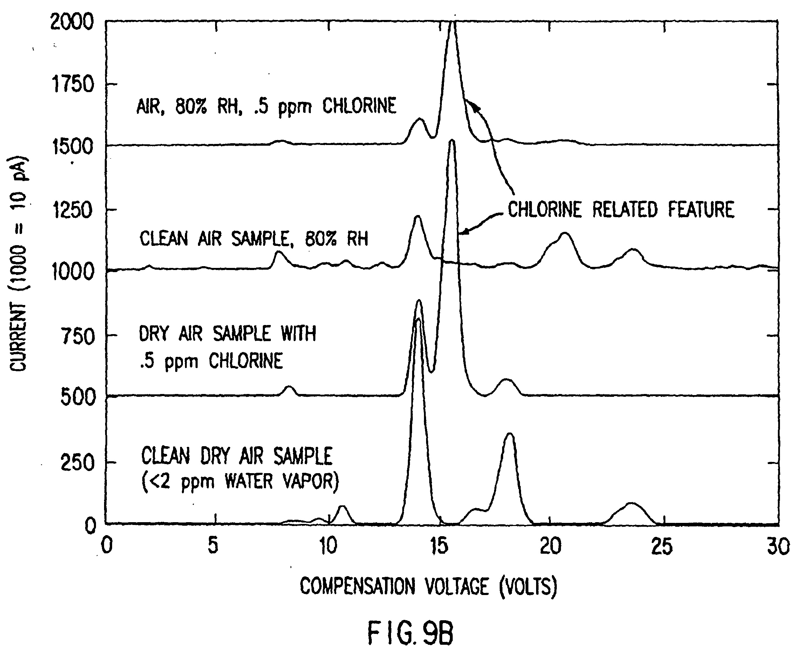

As shown in **Figure 5** a flow smoothing insert **93** can be placed in the gap between a heated transfer line shell **76c** and the inner surface of the **IMS** housing **11** to eliminate the turbulence created by the transfer line outlet end **77**. The shape of the shell **76c** reduces the gap between the **IMS** housing **11** inner surface and the shell **76c** at the transfer line mounting flange **79** while gradually increasing this gap closer to the transfer line outlet end **77**. The flow smoothing insert **93** is preferably made of a fine pitch stainless steel mesh shaped in the form of a round disc with a center opening concentric with the outer circumference of the disc. Other possible materials for the flow smoothing insert **93** are titanium, stainless steel, gold, nickel and other non-reactive metals having an inherently low vapor pressure characteristic. Other low porosity, low vapor pressure non-reactive, non-metallic materials such as glass, quartz, teflon and sapphire can be used for the flow smoothing insert **93**. The flow smoothing insert **93** is preferably slipped over the transfer line outlet end **77** to form an interference fit with the transfer line shell **76c** prior to mounting the heating device on the **IMS** sensor. When the heating device **92** is mounted on the **IMS** sensor **10** the flow smoothing insert **93** will fill the gap between the transfer line shell **76c** and the **IMS** housing **11** inner surface at a location proximate to the transfer line outlet end **77**. Since the surface of the transfer line shell **76c** is electrically connected (not shown) to electrode **32** to contribute to the radial electric field created by the bias potential applied to electrode **32,** the flow smoothing insert **93** must be electrically insulated from the grounded **IMS** housing **11**. This may be accomplished by placing a band **94** of electrically insulating material such as teflon between the flow smoothing insert **93** and the **IMS** housing **11** inner surface. After the inlet heating device **92** is mounted on the **IMS** sensor **10** with the flow smoothing insert **93** attached, the flow entering the carrier stream plenum **26** of the **IMS** sensor **10** will undergo gradual volume expansion before being filtered through the flow smoothing insert **93**. This gradual volume expansion in combination with the filtering will produce a laminar carrier stream flow profile throughout the volume between the transfer line outlet end **77** and the **IMS** housing **11** upon exit of the carrier flow stream from the flow smoothing insert **93.** This laminar flow profile prevents the sample stream from being mixed with the portion of the carrier stream entering the analytical gap of the **IMS** sensor **10** of U.S. Patent No. 5,420,424. This in turn will allow increasing the flow entering the carrier stream plenum **26** so that losses in **IMS** sensitivity due to ion diffusion in the analytical gap are minimized. **Figure 9B** shows the increased sensitivity of the **IMS** sensor's response with the flow smoothing insert **93** attached to the heated inlet transfer line **74** or **92** as compared to the **IMS** sensor's measurements without the flow smoothing insert **93,** as shown in **Figure 9A**.

While presently preferred embodiments of practicing the invention has been shown and described with particularity in connection with the accompanying drawings, the invention may otherwise be embodied within the scope of the following claims.

## Claims

1. A system comprising:
an ion mobility spectrometer (10);
A. a pump (21) in communication with both an outlet (6) and a carrier stream inlet (7) of the ion mobility spectrometer (10) for recirculating ion mobility spectrometer outlet fluid flow (6) into the carrier stream inlet (7);
B. at least one filter (22a, 22b) in communication with the pump (21) for removing impurities from the recirculated flow; and
C. an exhaust (8) for removing a portion of the outlet fluid flow from the system, wherein the amount of fluid (8) removed from the system is equal to the amount of fluid (3) entering a sample stream inlet of the ion mobility spectrometer (10).

2. The system of Claim 1, wherein the ion mobility spectrometer (10) is transportable when connected to the filtration system (A, B, C).

3. The system of Claim 1, further comprising:
A. a first filter (22a) in communication with the inlet of the pump (21); and
B. a second filter (22b) in communication with the outlet of the pump (21);
wherein the filters prevent the migration of impurities into the ion mobility spectrometer (10) when the filtration system is in use.

4. The system of Claim 1, further comprising a flow restrictor in communication with the sample stream inlet of the ion mobility spectrometer (10) for controlling the amount of fluid entering the sample stream inlet.

5. The system of Claim 1, further comprising a gas chromatograph column (72) in communication with the sample stream inlet of the ion mobility spectrometer (10).

6. The system of Claim 5, wherein
A. the multicapillary gas chromatograph (72) column contains a coating comprised of a stationary phase substance in communication with the sample stream inlet for transmitting an unknown concentration level of at least one analyte into the sample stream inlet to be measured by the ion mobility spectrometer (10); the system further comprising:
B. a sample injector (73) in communication with the multicapillary column (72) for injecting the at least one analyte into the multicapillary column (72); and
C. a source of carrier gas in communication with the sample injector (73) for entraining the at least one analyte for transport into the multicapillary column (72);
wherein the at least one analyte is soluble in the stationary phase substance such that transport of the at least one analyte into the sample stream inlet will be delayed by a predetermined time interval in the multicapillary column (72) prior to entering the sample stream inlet to be measured by the ion mobility spectrometer (10).

7. The system of Claim 6, wherein the stationary phase substance is selected from the group consisting of SE-30, SE-54 and carbowax 20M.

8. The system of Claim 6, wherein the sample injector (73) contains a septum membrane for injecting the at least one analyte into the carrier gas.

9. The system of Claim 6, further comprising a pressure regulator in communication with the source of carrier gas for regulating the pressure of the carrier gas entering the sample injector (73).

10. The system of Claim 6, further comprising a heated transfer line in communication with the multicapillary column (72) and the sample stream inlet for preventing adsorption of the at least one analyte prior to entering the sample stream inlet.

11. The system of Claim 1, further comprising a transfer line for heating the fluid stream entering the sample stream inlet of an ion mobility spectrometer (10) the transfer line comprising:
A. a hollow passageway (74) having an inlet end for receiving the fluid stream into the sample stream inlet;
B. a hollow housing attached to both the passageway inlet and outlet ends for mounting the transfer line to the sample stream inlet of the ion mobility spectrometer;
C. an electrical heating element (78) surrounding the surface of the passageway (74) for heating the passageway (74); and
D. a temperature control circuit for controlling electrical power input to the heating element (78); comprising:
(i) at least one temperature measuring device attached to the surface of the passageway (74) for measuring the temperature of the passageway (74);
(ii) a temperature controller having an input electrically connected to the temperature measuring device and an output electrically connected to the heating element for:
(a) comparing the temperature measured by the temperature measuring device to a predetermined reference value; and
(b) adjusting the electrical power input to the heating element (78) to substantially match the temperature of the passageway (74) to the reference value.

12. The system of Claim 5 or 6, further comprising a transfer line in communication with the gas chromatograph column (72) for heating a fluid stream entering the sample stream inlet of an ion mobility spectrometer (10); the transfer line comprising:
A. a hollow passageway (74) having an inlet end in communication with an outlet end for passage of a sample fluid stream from the gas chromatograph column into the sample stream inlet;
B. a hollow housing attached to both the passageway inlet and outlet ends for mounting the transfer line to the sample stream inlet of the ion mobility spectrometer;
C. an electrical heating element (78) surrounding the surface of the passageway (74) for heating the passageway (74); and
D. a temperature control circuit for controlling electrical power input to the heating element (78); comprising:
(i) at least one temperature measuring device attached to the surface of the passageway (74) for measuring the temperature of the passageway (74);
(ii) a temperature controller having an input electrically connected to the temperature measuring device and an output electrically connected to the heating element for:
(a) comparing the temperature measured by the temperature measuring device to a predetermined reference value; and
(b) adjusting the electrical power input to the heating element (78) to substantially match the temperature of the passageway (74) to the reference value.

13. The system of Claim 11, further comprising an element for reducing turbulence in a flow stream entering the carrier stream inlet of the ion mobility spectrometer (10); comprising an insert of porous material placed between the transfer line housing and the surface of the sample stream inlet at a location proximate to the outlet end of the transfer line, wherein the insert fills the gap between the transfer line housing and the sample stream inlet surface.

14. The system of Claim 1, wherein the ion mobility spectrometer (10) comprises:
A. a housing having at least one inlet for communication with a sample media and at least one outlet,
B. an analyzer positioned within the housing comprising:
(i) at least first and second longitudinally spaced apart electrodes, the space between the electrodes defining a longitudinal analytical gap, the gap being in communication with a source of carrier gas for flow therethrough,
(ii) an ionization source juxtaposed with the analytical gap and in communication with the inlet for ionization of sample media,
(iii) an ion aperture defining an opening between the ionization source and the analytical gap,
(iv) a third electrode positioned proximate to the ion aperture,
(v) at least one outlet aperture from the analytical gap remote from the ion aperture,
(vi) an ion detector for measuring ions from the analytical gap and spaced from the electrodes, and
(vii) an electrical controller connected to the electrodes for impressing:
(a) direct current potentials to the first, second and third electrodes, and
(b) a periodic asymmetrical potential to the first and second electrode, the potentials capable of creating a transverse electric field therebetween during the flow of carrier gas in the analytical gap.

15. The system of Claim 1 further comprising:
A. a plurality of valves (50) in communication with the at least one filter (22a, 22b) for recirculating a portion of the ion mobility spectrometer outlet fluid flow (6) into the sample fluid stream by introducing a first portion (2) into the sample stream inlet through a first valve (23) and a second portion (5) into the sample fluid stream through at least a second valve (24) wherein the valves maintain a constant flow rate into the sample stream inlet; and
B. a device (20) in communication with the second valve for introducing a controlled concentration level of the selected ionizable substance into the the sample fluid stream.

16. The system of Claim 15, wherein the device in communication with the valves for introducing a controlled concentration level of the selected ionizable substance into the first portion of the recirculated flow directed to the sample fluid stream is selected from the group consisting of a permeation calibration device, a diffusion vial and a pressurized calibration cylinder.

17. A method of using the fluid filtration system of Claim 15 or 16 with an ion mobility spectrometer (10) to measure an unknown concentration level of a selected ionizable substance present in a sample fluid stream in which other substances may coexist, comprising the following steps:
A. introducing a controlled concentration level of the selected ionizable substance into the first portion of the recirculated flow directed to the sample fluid stream inlet;
B. combining the sample fluid stream with both the first and second portions of the recirculated flow not directed to the carrier stream inlet to measure the combined unknown and controlled concentration level;
C. combining the sample fluid stream with the second portion of the recirculated flow not directed to the carrier stream inlet to measure the unknown concentration level;
D. obtaining the unknown concentration by comparing the combined concentration measurement to the unknown concentration measurement.

18. The method of Claim 17, wherein the unknown concentration level is obtained by calculating the ratio of the combined concentration measurement to the unknown concentration measurement in accordance with the Standard Addition Method.

19. The method of Claim 17, wherein the unknown concentration level is calculated by a device selected from the group consisting of computer processor, an electronic integrated differential amplifier circuit, an analog comparison circuit comprised of discrete electrical components, and a combined analog and digital comparison circuit comprised of discrete electrical and digital logic components.

20. A method of using the fluid filtration system of Claim 15 or 16 to calibrate an ion mobility spectrometer (10) by combining the first and second portions of the recirculated flow directed to the sample fluid stream inlet to measure the controlled concentration level.

21. The system of Claim 15, further comprising:
A. a first filter (22a) in communication with the inlet of the pump (21); and
B. a second filter (22b) in communication with the outlet of the pump (21);
wherein the filters prevent the migration of impurities into the ion mobility spectrometer (10) when the filtration system is in use.

22. The system of Claim 15, wherein the ion mobility spectrometer (10) comprises:
A. a housing having at least one inlet for communication with a sample media and at least one outlet,
B. an analyzer positioned within the housing comprising:
(i) at least first and second longitudinally spaced apart electrodes, the space between the electrodes defining a longitudinal analytical gap, the gap being in communication with a source of carrier gas for flow therethrough.
(ii) an ionization source juxtaposed with the analytical gap and in communication with the inlet for ionization of sample media,
(iii) an ion aperture defining an opening between the ionization source and the analytical gap,
(iv) a third electrode positioned proximate to the ion aperture,
(v) at least one outlet aperture from the analytical gap remote from the ion aperture,
(vi) an ion detector for measuring ions from the analytical gap and spaced from the electrodes, and
(vii) an electrical controller connected to the electrodes for impressing:
(a) direct current potentials to the first, second and third electrodes, and
(b) a periodic asymmetrical potential to the first and second electrode, the potentials capable of creating a transverse electric field therebetween during the flow of carrier gas in the analytical gap.

## Patentansprüche

1. System, umfassend:
ein lonenbeweglichkeits-Spektrometer (10);
A. eine Pumpe (21) in Wechselwirkung bzw. Verbindung mit sowohl einem Auslaß (6) als auch einem Trägerstromeinlaß (7) des lonenbeweglichkeits-Spektrometers (10) zum Rezirkulieren des lonenbeweglichkeits-Spektrometer-Auslaßfluidstroms (6) in den Trägerstromeinlaß (7);
B. wenigstens ein Filter (22a, 22b) in Wechselwirkung bzw. Verbindung mit der Pumpe (21) zum Entfernen von Unreinheiten bzw. Verunreinigungen aus dem rezirkulierten Strom; und
C. einen Auslaß (8) zum Entfernen eines Teils des Auslaßfluidstroms aus dem System, wobei die Menge des Fluids (8), das aus dem System entfernt ist, gleich der Menge des Fluids (3) ist, die in einen Probenstromeinlaß des lonenbeweglichkeits-Spektrometers (10) eintritt.

2. System nach Anspruch 1, wobei das Ionenbeweglichkeits-Spektrometer (10) transportierbar ist, wenn es mit dem Filtrationssystem (A, B, C) verbunden ist.

3. System nach Anspruch 1, weiterhin umfassend:
A. ein erstes Filter (22a) in Verbindung mit dem Einlaß der Pumpe (21), und
B. ein zweites Filter (22b) in Verbindung mit dem Auslaß der Pumpe (21), wobei die Filter die Migration von Verunreinigungen in das Ionenbeweglichkeits-Spektrometer (10) verhindern, wenn das Filtrationssystem in Verwendung ist.

4. System nach Anspruch 1, weiterhin umfassend eine Flußbeschränkungseinrichtung in Wechselwirkung mit dem Probenstromeinlaß des lonenbeweglichkeits-Spektrometers (10) zum Steuern bzw. Regeln der Fluidmenge, die in den Probenstromeinlaß eintritt.

5. System nach Anspruch 1, weiterhin umfassend eine Gaschromatographiesäule (72) in Wechselwirkung mit dem Probenstromeinlaß des Ionenbeweglichkeits-Spektrometers (10).

6. System nach Anspruch 5, wobei
A. die Mehrkapillaren-Gaschromatographiesäule (72) eine Beschichtung bestehend aus einer Substanz einer stationären Phase in Wechselwirkung mit dem Probenstromeinlaß zum Übertragen eines nicht bekannten Konzentrationsniveaus von wenigstens einem Analyten in den Probenstromeinlaß enthält, der durch das Ionenbeweglichkeits-Spektrometer (10) zu messen ist,
wobei das System weiterhin umfaßt:
B. einen Probeninjektor (73) in Wechselwirkung mit der Mehrkapillarensäule (72), um den wenigstens einen Analyten in die Mehrkapillarensäule (72) zu injizieren, und
C. eine Quelle von Trägergas in Wechselwirkung mit dem Probeninjektor (73) zum Eintragen bzw. Mitnehmen des wenigstens einen Analyten zum Transport in die Mehrkapillarensäule (72);
wobei der wenigstens eine Analyt in der Substanz der stationären Phase derart lösbar ist, daß der Transport des wenigstens einen Analyten in den Probenstromeinlaß um ein vorbestimmtes Zeitintervall in der Mehrkapillarensäule (72) vor einem Eintreten des Probenstromeinlasses verzögert ist, der durch den lonenbeweglichkeits-Spektrometer (10) zu messen ist.

7. System nach Anspruch 6, wobei die Substanz der stationären Phase aus der Gruppe, bestehend aus SE-30, SE-54 und Carbowax 20M, gewählt ist.

8. System nach Anspruch 6, wobei der Probeninjektor (73) eine Trenn- bzw. Septummembran zum Injizieren des wenigstens einen Analyten in das Trägergas umfaßt.

9. System nach Anspruch 6, weiterhin umfassend einen Druckregukator in Wechselwirkung mit der Quelle des Trägergases zum Regulieren des Drucks des Trägergases, das in den Probeninjektor (73) eintritt.

10. System nach Anspruch 6, weiterhin umfassend eine erwärmte Transfer- bzw. Übertragungsleitung in Wechselwirkung mit der Mehrkapillarensäule (72) und dem Probenstromeinlaß für ein Verhindern einer Absorption des wenigstens einen Analyten vor einem Eintreten in den Probenstromeinlaß.

11. System nach Anspruch 1, weiterhin umfassend eine Übertragungsleitung zum Erwärmen des Fluidstroms, der in den Probenstromeinlaß eines lonenbeweglichkeits-Spektrometers (10) eintritt, wobei die Übertragungsleitung umfaßt:
A. einen hohlen Durchtritt (74), der ein Einlaßende zum Aufnehmen des Fluidstroms in den Probenstromeinlaß aufweist;
B. ein hohles Gehäuse, das sowohl an den Durchtrittseinlaß als auch die Auslaßenden festgelegt ist, um die Übertragungsleitung an den Probenstromeinlaß des Ionenbeweglichkeits-Spektrometers festzulegen;
C. ein elektrisches Heizelement (78), das die Oberfläche des Durchtritts (74) zum Erwärmen bzw. Heizen des Durchtritts (74) umgibt; und
D. eine Temperatur-Steuer- bzw. -Regelschaltung zum Steuern bzw. Regeln eines elektrischen Leistungseintrags zu dem Heizelement (78), umfassend:
(i) wenigstens eine Temperaturmeßvorrichtung, die an der Oberfläche des Durchtritts (74) zum Messen der Temperatur des Durchtritts (74) festgelegt ist;
(ii) eine Temperatur-Steuer- bzw. Regeleinrichtung, die einen Eingang, der elektrisch mit der Temperaturmeßvorrichtung verbunden ist, und einen Ausgang aufweist, der elektrisch mit dem Heizelement verbunden ist, um:
(a) die Temperatur, die durch die Temperaturmeßvorrichtung gemessen ist, mit einem vorbestimmten Bezugs- bzw. Referenzwert zu vergleichen; und
(b) die elektrische Leistung einzustellen, die zu dem Heizelement (78) eingebracht wird, um im wesentlichen die Temperatur des Durchtritts (74) mit dem Bezugswert abzustimmen bzw. abzugleichen.

12. System nach Anspruch 5 oder 6, weiterhin umfassend eine Übertragungsleitung in Wechselwirkung mit der Gaschromatographiesäule (72), um einen Fluidstrom zu erhitzen, der in den Probenstromeinlaß eines lonenbeweglichkeits-Spektrometers (10) eintritt, wobei die Übertragungsleitung umfaßt:
A. einen hohlen Durchtritt (74), der ein Einlaßende in Wechselwirkung mit einem Auslaßende für den Durchtritt eines Probenfluidstroms von der Gaschromatographiesäule in den Probenstromeinlaß umfaßt;
B. ein hohles Gehäuse, das sowohl an die Durchtrittseinlaß- als auch - auslaßenden für ein Festlegen der Übertragungsleitung an dem Probenstromeinlaß der lonenbeweglichkeits-Spektrometrie festgelegt ist;
C. ein elektrisches Heizelement (78), das die Oberfläche des Durchtritts (74) zum Erhitzen des Durchtritts (74) umgibt; und
D. eine Temperatur-Steuer- bzw. -Regelschaltung zum Steuern bzw. Regeln der elektrischen Leistung, die zu dem Heizelement (78) eingebracht wird, umfassend:
(i) wenigstens eine Temperaturmeßvorrichtung, die an der Oberfläche des Durchtritts (74) festgelegt ist, um die Temperatur des Durchtritts (74) zu messen,
(ii) eine Temperatur-Steuer- bzw. -Regeleinrichtung, die einen Einlaß, der elektrisch mit der Temperaturmeßvorrichtung verbunden ist, und einen Auslaß aufweist, der elektrisch mit dem Heizelement verbunden ist, um:
(a) die Temperatur, die durch die Temperaturmeßvorrichtung gemessen ist, mit einem vorbestimmten Bezugswert zu vergleichen; und
(b) die elektrische Leistung einzustellen, die dem Heizelement (78) eingebracht wird, um im wesentlichen die Temperatur des Durchtritts (74) mit dem Bezugswert übereinstimmen zu lassen.

13. System nach Anspruch 11, weiterhin umfassend ein Element zum Reduzieren einer Turbulenz in einem Fluidstrom, der in den Trägerstromeinlaß des lonenbeweglichkeits-Spektrometers (10) eintritt, umfassend einen Einsatz aus porösem Material, der zwischen dem Übertragungsleitungsgehäuse und der Oberfläche des Probenstromeinlasses an einem Ort nahe dem Auslaßende der Übertragungsleitung angeordnet ist, wobei der Einsatz den Spalt zwischen dem Übertragungsleitungsgehäuse und der Probenstromeinlaßoberfläche ausfüllt.

14. System nach Anspruch 1, wobei das Ionenbeweglichkeits-Spektrometer (10) umfaßt:
A. ein Gehäuse, das wenigstens einen Einlaß zur Verbindung bzw. Wechselwirkung mit einem Probenmedium und wenigstens einen Auslaß aufweist,
B. eine Analysiereinrichtung, die innerhalb des Gehäuses angeordnet ist, umfassend:
(i) wenigstens erste und zweite in Längsrichtung beabstandete Elektroden, wobei der Raum zwischen den Elektroden einen analytischen Längsspalt definiert, wobei der Spalt in Wechselwirkung mit einer Trägergasquelle für einen Fluß dadurch ist,
(ii) eine Ionisierungsquelle, die dem analytischen Spalt gegenüberliegt und in Wechselwirkung mit dem Einlaß zur Ionisierung des Probenmediums ist,
(iii) eine Ionenapertur, die eine Öffnung zwischen der Ionisationsquelle und dem analytischen Spalt definiert,
(iv) eine dritte Elektrode, die nahe der Ionenapertur positioniert ist,
(v) wenigstens eine Auslaßöffnung bzw. -apertur von dem analytischen Spalt entfernt von der Ionenapertur,
(vi) einen Ionendetektor zum Messen von Ionen von dem analytischen Spalt und beabstandet von den Elektroden, und
(vii) eine elektrische Steuer- bzw. Regeleinrichtung, die mit den Elektroden verbunden ist, zum Anlegen bzw. Aufprägen von:
(a) Gleichstrompotentialen an die ersten, zweiten und dritten Elektroden,
(b) ein periodisches asymmetrisches Potential an die erste und zweite Elektrode, wobei die Potentiale fähig sind, ein querverlaufendes elektrisches Feld dazwischen während dem Fluß des Trägergases in dem analytischen Spalt zu erzeugen.

15. System nach Anspruch 1, weiterhin umfassend:
A. eine Mehrzahl von Ventilen (50) in Wechselwirkung mit dem wenigstens einen Filter (22a, 22b), um einen Teil des lonenbeweglichkeits-Spektrometerauslaß-Fluidstroms (6) in den Probenfluidstrom zu rezirkulieren, indem ein erster Teil (2) in den Probenstromeinlaß durch ein erstes Ventil (23) eingetragen ist und ein zweiter Teil (5) in den Probenfluidstrom durch wenigstens ein zweites Ventil (24) eingetragen ist, wobei die Ventile eine konstante Flußgeschwindigkeit in den Probenstromeinlaß aufrecht erhalten; und
B. eine Vorrichtung (20) in Wechselwirkung mit dem zweiten Ventil (24) zum Einbringen eines gesteuerten Konzentrationsniveaus der gewählten ionisierbaren Substanz in den Probenfluidstrom.

16. System nach Anspruch 15, wobei die Vorrichtung in Wechselwirkung mit dem Ventil zum Einbringen eines kontrollierten bzw. gesteuerten Konzentrationsniveaus der gewählten ionisierbaren Substanz in den ersten Abschnitt des rezirkulierten Flusses, der zu dem Probenfluidstrom gerichtet ist, aus der Gruppe bestehend aus einer Permeationskalibriervorrichtung, einer Diffusionsphiole und einem unter Druck stehenden Kalibrationszylinder gewählt ist.

17. Verfahren zum Verwenden des Fluidfiltrationssystems von Anspruch 15 oder 16 mit einem lonenbeweglichkeits-Spektrometer (10), um ein nicht bekanntes Konzentrationsniveau einer gewählten ionisierbaren Substanz zu messen, die in einem Probenfluidstrom vorhanden ist, in welchem andere Substanzen gleichzeitig vorliegen können, umfassend die folgenden Schritte:
A. Einbringen eines kontrollierten bzw. gesteuerten Konzentrationsniveaus der gewählten ionisierbaren Substanz in den ersten Abschnitt des rezirkulierten Flusses, der zu dem Probenfluidstromeinlaß gerichtet ist;
B. Kombinieren des Probenfluidstroms sowohl mit dem ersten als auch zweiten Teil des rezirkulierten Flusses, der nicht zu dem Trägerstromeinlaß gerichtet ist, um das kombinierte, nicht bekannte und gesteuerte bzw. geregelte Konzentrationsniveau zu messen;
C. Kombinieren des Probenfluidstroms mit dem zweiten Teil des rezirkulierten Flusses, der nicht zu dem Trägerstromeinlaß gerichtet ist, um das nicht bekannte Konzentrationsniveau zu messen;
D. Erhalten der nicht bekannten Konzentration durch ein Vergleichen der Messung der kombinierten Konzentration mit der Messung der nicht bekannten Konzentration.

18. Verfahren nach Anspruch 17, wobei das nicht bekannte Konzentrationsniveau durch ein Berechnen des Verhältnisses der Messung der kombinierten Konzentration mit der Messung der nicht bekannten Konzentration in Übereinstimmung mit dem Standard-Additionsverfahren erhalten wird.

19. Verfahren nach Anspruch 17, wobei das nicht bekannte Konzentrationsniveau durch eine Vorrichtung, gewählt aus der Gruppe, bestehend aus einem Computerprozessor, einer elektronischen integrierten Differential-Verstärkungsschaltung, einer Analogvergleichsschaltung, bestehend aus diskreten elektrischen Komponenten, und einer kombinierten Analog- und Digital-Vergleichsschaltung, bestehend aus diskreten elektrischen und digitalen, logischen Komponenten berechnet wird.

20. Verfahren zum Verwenden des Fluidfiltrationssystems von Anspruch 15 oder 16, um ein lonenbeweglichkeits-Spektrometer (10) zu kalibrieren, indem die ersten und zweiten Teile des rezirkulierten Flusses, der zu dem Probenfluidstromeinlaß gerichtet ist, kombiniert werden, um das gesteuerte bzw. geregelte Konzentrationsniveau zu messen.

21. System nach Anspruch 15, weiterhin umfassend:
A. ein erstes Filter (22a) in Verbindung bzw. Wechselwirkung mit dem Einlaß der Pumpe (21); und
B. ein zweites Filter (22b) in Verbindung bzw. Wechselwirkung mit dem Auslaß der Pumpe (21),
wobei die Filter die Migration von Verunreinigungen in das lonenbeweglichkeits-Spektrometer (10) verhindern, wenn sich das Filtrationssystem in Verwendung befindet.

22. System nach Anspruch 15, wobei das lonenbeweglichkeits-Spektrometer (10) umfaßt:
A. ein Gehäuse, das wenigstens einen Einlaß zur Wechselwirkung bzw. Verbindung mit einem Probenmedium und wenigstens einen Auslaß aufweist,
B. eine Analysiervorrichtung, die innerhalb des Gehäuses positioniert ist, umfassend:
(i) wenigstens erste und zweite, in Längsrichtung voneinander beabstandete Elektroden, wobei der Raum zwischen den Elektroden einen analytischen Längsspalt definiert, wobei der Spalt in Wechselwirkung mit einer Quelle von Trägergas für einen Strom bzw. Fluß dadurch ist,
(ii) eine Ionisationsquelle, die dem analytischen Spalt gegenüberliegt und in Kommunikation mit dem Einlaß zur Ionisation eines Probenmediums ist,
(iii) eine Ionenapertur, die eine Öffnung zwischen der Ionisationsquelle und dem analytischen Spalt definiert,
(iv) eine dritte Elektrode, die nahe der Ionenapertur angeordnet ist,
(v) wenigstens eine Auslaßapetur von dem analytischen Spalt entfernt von der Ionenapertur,
(vi) einen Ionendetektor zum Messen von Ionen von dem analytischen Spalt und beabstandet von den Elektroden, und
(vii) eine elektrische Steuer- bzw. Regeleinrichtung, die mit den Elektroden verbunden ist zum Aufbringen von:
(a) Gleichstrompotentialen an die erste, zweite und dritte Elektrode, und
(b) einem periodischen asymmetrischen Potential zu der ersten und zweiten Elektrode, wobei die Potentiale fähig sind, ein querverlaufendes elektrisches Feld dazwischen während dem Fluß des Trägergases in dem analytischen Spalt zu erzeugen.

## Revendications

1. Système comprenant :
un spectromètre de mobilité ionique (10) ;
A. une pompe (21) en communication à la fois avec une sortie (6) et une entrée (7) de flux porteur du spectromètre de mobilité ionique (10) pour la recirculation de l'écoulement du fluide de sortie (6) du spectromètre de mobilité ionique vers l'entrée de flux porteur (7) ;
B. au moins un filtre (22a, 22b) en communication avec la pompe (21) pour éliminer les impuretés de l'écoulement de recirculation ; et
C. une évacuation (8) pour enlever du système une portion de l'écoulement de fluide de sortie, dans lequel la quantité de fluide (8) enlevée du système est égale à la quantité de fluide (3) entrant par une entrée de flux d'échantillon du spectromètre de mobilité ionique (10).

2. Système selon la revendication 1, dans lequel le spectromètre de mobilité ionique (10) est transportable lorsqu'il est connecté au système de filtration (A, B, C).

3. Système selon la revendication 1, comprenant en outre :
A. un premier filtre (22a) en communication avec l'entrée de la pompe (21) ; et
B. un deuxième filtre (22b) en communication avec la sortie de la pompe (21) ;
dans lequel les filtres empêchent la migration d'impuretés vers le spectromètre de mobilité ionique (10) lorsque le système de filtration est en service.

4. Système selon la revendication 1, comprenant en outre un limiteur de débit en communication avec l'entrée de flux d'échantillon du spectromètre de mobilité ionique (10), pour régler la quantité de fluide entrant par l'entrée de flux d'échantillon.

5. Système selon la revendication 1, comprenant en outre une colonne de chromatographie gazeuse (72) en communication avec l'entrée de flux d'échantillon du spectromètre de mobilité ionique (10).

6. Système selon la revendication 5, dans lequel
A. la colonne de chromatographie gazeuse multicapillaire (72) contient un revêtement constitué d'une substance à phase stationnaire en communication avec l'entrée de flux d'échantillon pour introduire une valeur de concentration inconnue d'au moins un analyte dans l'entrée de flux d'échantillon à mesurer par le spectromètre de mobilité ionique (10), le système comprenant en outre :
B. un injecteur d'échantillon (73) en communication avec la colonne multicapillaire (72) pour injecter le dit au moins un analyte dans la colonne multicapillaire (72) ; et
C. une source de gaz porteur en communication avec l'injecteur d'échantillon (73) pour entraîner le dit au moins un analyte pour transport et introduction dans la colonne multicapillaire (72) ;
dans lequel le dit au moins un analyte est soluble dans la substance à phase stationnaire de sorte que le transport du dit au moins un analyte dans l'entrée de flux d'échantillon est retardé d'un intervalle de temps prédéterminé dans la colonne multicapillaire (72) avant d'arriver à l'entrée de flux d'échantillon à mesurer par le spectromètre de mobilité ionique (10).

7. Système selon la revendication 6, dans lequel la substance à phase stationnaire est choisie dans le groupe comprenant SE-30, SE-54 et carbowax 20M.

8. Système selon la revendication 6, dans lequel l'injecteur d'échantillon (73) contient une membrane de séparation pour injecter le dit au moins un analyte dans le gaz porteur.

9. Système selon la revendication 6, comprenant en outre un régulateur de pression en communication avec la source de gaz porteur pour réguler la pression du gaz porteur entrant dans l'injecteur d'échantillon (73).

10. Système selon la revendication 6, comprenant en outre une ligne de transfert chauffée en communication avec la colonne multicapillaire (72) et l'entrée de flux d'échantillon pour empêcher l'adsorption du dit au moins un analyte avant son arrivée à l'entrée de flux d'échantillon.

11. Système selon la revendication 1, comprenant en outre une ligne de transfert pour chauffer le flux de fluide entrant à l'entrée de flux d'échantillon d'un spectromètre de mobilité ionique (10), la ligne de transfert comprenant :
A. un passage creux (74) ayant une extrémité d'entrée pour recevoir le flux de fluide dans l'entrée de flux d'échantillon ;
B. une enveloppe creuse attachée à la fois aux extrémités d'entrée et de sortie du passage pour monter la ligne de transfert à l'entrée de flux d'échantillon du spectromètre de mobilité ionique;
C. un élément de chauffage électrique (78) entourant la surface du passage (74) pour chauffer le passage (74) ; et
D. un circuit de réglage de température pour régler l'entrée de puissance électrique à l'élément chauffant (78), comprenant :
(i) au moins un dispositif de mesure de température attaché à la surface du passage (74) pour mesurer la température du passage (74);
(ii) un régulateur de température ayant une entrée électriquement connectée au dispositif de mesure de température et une sortie électriquement connectée à l'élément chauffant pour :
(a) comparaison de la température mesurée par le dispositif de mesure de température à une valeur de référence prédéterminée ; et
(b) réglage de l'entrée de puissance électrique à l'élément de chauffage (78) pour accorder sensiblement la température du passage (74) à la valeur de référence.

12. Système selon la revendication 5 ou 6, comprenant en outre une ligne de transfert en communication avec la colonne de chromatographie gazeuse (72) pour chauffage d'un flux de fluide entrant à l'entrée de flux d'échantillon d'un spectromètre de mobilité ionique (10), la ligne de transfert comprenant :
A. un passage creux (74) ayant une extrémité d'entrée en communication avec une extrémité de sortie pour passage d'un flux de fluide d'échantillon de la colonne de chromatographie gazeuse vers l'entrée de flux d'échantillon ;
B. un boîtier creux fixé à la fois aux extrémités d'entrée et de sortie du passage, pour monter la ligne de transfert à l'entrée de flux d'échantillon du spectromètre de mobilité ionique ;
C. un élément de chauffage électrique (78) entourant la surface du passage (74) pour chauffer le passage (74) ; et
D. un circuit de réglage de température pour régler l'entrée de puissance électrique à l'élément chauffant (78) comprenant :
(i) au moins un dispositif de mesure de température attaché à la surface du passage (74) pour mesurer la température du passage (74) ;
(ii) un régulateur de température ayant une entrée électriquement connectée au dispositif de mesure de température et une sortie électriquement connectée à l'élément chauffant pour :
(a) comparer la température mesurée par le dispositif de mesure de température à une valeur de référence prédéterminée ; et
(b) régler l'entrée de puissance électrique à l'élément de chauffage (78) pour accorder sensiblement la température du passage (74) à la valeur de référence.

13. Système selon la revendication 11, comprenant en outre un élément de réduction de la turbulence dans un écoulement entrant à l'entrée de flux porteur du spectromètre de mobilité ionique (10), comprenant un insert de matière poreuse placé entre le boîtier de la ligne de transfert et la surface de l'entrée de flux d'échantillon à un endroit proche de l'extrémité de sortie de la ligne de transfert, dans lequel l'insert remplit l'intervalle entre le boîtier de ligne de transfert et la surface d'entrée de flux d'échantillon.

14. Système selon la revendication 1, dans lequel le spectromètre de mobilité ionique (10) comprend :
A. un boîtier comportant au moins une entrée pour communication avec un fluide échantillon, et au moins une sortie,
B. un analyseur placé dans le boîtier et comprenant :
(i) au moins une première et une deuxième électrodes longitudinalement espacées l'une de l'autre, l'espace entre les électrodes définissant un intervalle analytique longitudinal, l'intervalle étant en communication avec une source de gaz porteur pour écoulement à travers cet intervalle ;
(ii) une source d'ionisation juxtaposée à l'intervalle analytique et en communication avec l'entrée pour ionisation du fluide échantillon,
(iii) un orifice ionique définissant une ouverture entre la source d'ionisation et l'intervalle analytique,
(iv) une troisième électrode placée près de l'orifice ionique,
(v) au moins un orifice de sortie de l'intervalle analytique, distant de l'orifice ionique,
(vi) un détecteur ionique pour mesurer les ions venant de l'intervalle analytique et espacé des électrodes, et
(vii) un régulateur électrique connecté aux électrodes pour application :
(a) de potentiels de courant continu aux première, deuxième et troisième électrodes, et
(b) d'un potentiel asymétrique périodique aux première et deuxième électrodes, les potentiels pouvant créer un champ électrique transversal entre ces électrodes pendant l'écoulement du gaz porteur dans l'intervalle analytique.

15. Système selon la revendication 1, comprenant en outre
A-. une pluralité de vannes (50) en communication avec le dit au moins un filtre (22a, 22b) pour la recirculation d'une portion de l'écoulement de fluide de sortie (6) du spectromètre de mobilité ionique dans le flux de fluide d'échantillon par introduction d'une première portion (2) dans l'entrée de flux d'échantillon par l'intermédiaire d'une première vanne (23), et d'une deuxième portion (5) dans le flux de fluide d'échantillon par l'intermédiaire d'au moins une deuxième vanne (24), de sorte que les vannes maintiennent un débit constant dans l'entrée de flux d'échantillon ; et
B-. un dispositif (20) en communication avec la deuxième vanne pour introduire une valeur de concentration réglée de la substance ionisable choisie dans le flux de fluide d'échantillon.

16. Système selon la revendication 15, dans lequel le dispositif en communication avec les vannes d'introduction d'une valeur de concentration réglée de la substance ionisable choisie dans la première portion de l'écoulement recirculé dirigée vers le flux de fluide d'échantillon est choisi dans le groupe comprenant un dispositif d'étalonnage à perméation, un flacon à diffusion et un cylindre d'étalonnage sous pression.

17. Procédé d'utilisation du système de filtration de fluide de la revendication 15 ou 16 avec un spectromètre de mobilité ionique (10) pour mesurer une valeur de concentration inconnue d'une substance ionisable choisie présente dans un flux de fluide d'échantillon dans lequel d'autres substances peuvent coexister, comprenant les étapes suivantes :
A. introduction d'une valeur de concentration réglée de la substance ionisable choisie dans la première portion de l'écoulement recirculé dirigée vers l'entrée de flux de fluide d'échantillon ;
B. combinaison du flux de fluide d'échantillon à la fois avec les première et deuxième portions de l'écoulement recirculé non dirigé vers l'entrée de flux porteur, pour mesurer la valeur de concentration inconnue et réglée combinée ;
C. combinaison du flux de fluide d'échantillon avec la deuxième portion de l'écoulement recirculé non dirigée vers l'entrée de flux porteur pour mesurer la valeur de concentration inconnue ;
D. obtention de la concentration inconnue par comparaison de la mesure de concentration combinée à la mesure de concentration inconnue.

18. Procédé selon la revendication 17, dans lequel la valeur de concentration inconnue est obtenue par calcul du rapport de la mesure de concentration combinée à la mesure de concentration inconnue, conformément à la Méthode d'Addition Standard.

19. Procédé selon la revendication 17, dans lequel la valeur de concentration inconnue est calculée par un dispositif choisi dans le groupe comprenant un processeur informatique, un circuit amplificateur différentiel intégré électronique, un circuit de comparaison analogique constitué de composants électriques distincts, et un circuit de comparaison analogique et numérique combiné constitué de composants logiques électriques et numériques distincts.

20. Procédé d'utilisation du système de filtration de fluide de la revendication 15 ou 16 pour étalonner un spectromètre de mobilité ionique (10) par combinaison des première et deuxième portions de l'écoulement recirculé dirigé vers l'entrée de flux de fluide d'échantillon pour mesurer la valeur de concentration réglée.

21. Système selon la revendication 15, comprenant en outre :
A. un premier filtre (22a) en communication avec l'entrée de la pompe (21) ; et
B. un deuxième filtre (22b) en communication avec la sortie de la pompe (21);
dans lequel les filtres empêchent la migration d'impuretés dans le spectromètre de mobilité ionique (10) lorsque le système de filtration est en service.

22. Système selon la revendication 15, dans lequel le spectromètre de mobilité ionique (10) comprend :
A. un boîtier ayant au moins une entrée pour communication avec un fluide d'échantillon et au moins une sortie,
B. un analyseur placé dans le boîtier, comprenant :
(i) au moins une première et une deuxième électrodes longitudinalement espacées l'une de l'autre, l'espace entre les électrodes définissant un intervalle analytique longitudinal, l'intervalle étant en communication avec une source de gaz porteur pour écoulement traversant,
(ii) une source d'ionisation juxtaposée à l'intervalle analytique et en communication avec l'entrée, pour ionisation du fluide d'échantillon,
(iii) un orifice ionique définissant une ouverture entre la source d'ionisation et l'intervalle analytique,
(iv) une troisième électrode placée près de l'orifice ionique,
(v) au moins un orifice de sortie de l'intervalle analytique, distant de l'orifice ionique,
(vi) un détecteur d'ions pour mesurer les ions venant de l'intervalle analytique et espacé des électrodes, et
(vii) une unité de commande électrique connectée aux électrodes pour appliquer :
(a) des potentiels de courant continu aux première, deuxième et troisième électrodes, et
(b) un potentiel asymétrique périodique aux première et deuxième électrodes, les potentiels pouvant créer un champ électrique transversal entre ces électrodes pendant l'écoulement de gaz porteur dans l'intervalle analytique.
